# EUROPEAN PATENT SPECIFICATION

(11) **EP 3 131 252 B1**
(45) Date of publication and mention of the grant of the patent: **26.09.2018**
(21) Application number: 15180738.5
(22) Date of filing: 12.08.2015
(51) Int. Cl.: H04L 29/06

(54) **METHOD AND SYSTEM FOR NETWORK INTRUSION DETECTION**
VERFAHREN UND SYSTEM ZUR NETZWERKEINDRINGUNGSERKENNUNG
PROCÉDÉ ET SYSTÈME DE DÉTECTION D'INTRUSION DANS UN RÉSEAU

(43) Date of publication of application: 15.02.2017
(73) Proprietor: NATEK Technologies GmbH, 85748 Garching (DE)
(72) Inventor: ERTUGRUL, Necati, Ankara (TR); ERPOLAT, Timucin, Ankara (TR); ERPOLAT, Tolga, Ankara (TR)
(74) Representative: Richly & Ritschel Patentanwälte PartG mbB

(56) References cited:
- EP-A1- 1 742 416
- KR-A- 20030 063 949
- KR-A- 20080 040 257
- US-A1- 2005 108 377
- Mikehorn: "CaptureFilters - The Wireshark Wiki", , 9 July 2013 (2013-07-09), XP055288145, Retrieved from the Internet: URL:https://web.archive.org/web/2015051323 0636/https://wiki.wireshark.org/CaptureFil ters [retrieved on 2016-07-13]

## Description

The present invention relates to a method and a system for the detection of an intrusion in a computer network.

The intrusion of computer networks by malicious applications such as malware, key loggers, viruses or trojans and information leakages caused thereby poses an increasing risk for businesses and private persons alike. In particular, valuable and/or confidential information, such as intellectual property, is at risk to be disseminated or stolen by criminal third parties.

These malicious applications are generally unintentionally executed by the operating system of an infected host and thus run as a process or thread on said operating system. Current strategies to detect and eliminate such malicious application include the use of scanners that search the storage media of the host for known signatures of the malicious application.

However, due to a virtually infinite number of different malicious applications that emerge on a daily basis the identification remains a difficult task to undertake. In particular, this is due to the fact that a new signature for every new malicious application has to be derived and that it can only be provided to the scanners once said application has already infected at least one host. Thus, by the time adapted signatures are provided and spread to the various systems worldwide the malicious application may have already spread considerably and may have caused severe damage.

In addition, in recent times unknown vulnerabilities in software like drivers or the operating system itself are exploited with increasing frequency. Thus, as the malware is not run as a specific process or thread of the operating system, it is more difficult to detect by the scanner. Furthermore, new technologies such as virtualization, hypervisors, or, e.g., Intel's vPro platform make it possible to access the host without accessing or infecting the operating system itself. In these cases, where the operating system is bypassed by the malicious software, the malicious software may remain completely invisible to a scanner executed on the operating system.

KR 2008 0040257 discloses a method for detecting network worm and virus by collecting traffic data from network elements.

US 2005/108377 discloses a method for detecting abnormal traffic in a network.

Therefore, one object of the present invention is the provision of a method and a system for the detection of the intrusion in a computer network that is not dependent on the adaptation and provision of signatures. It is a further object of the present invention to provide a method and a system to detect such intrusions in real time. An even further object of the present invention is the provision of a method and a system to detect an intrusion in a computer network, wherein the malicious software is not executed by the operating system of an intruded host and/or bypasses the operating system of said host.

According to the present invention, these objects are achieved by the method of independent claim 1 and the system of independent claim 14. Further advantageous embodiments are given in the dependent claims.

In particular, the present invention provides a method for identifying an intrusion in a computer network, wherein the method comprises the steps of collecting at least one first data set comprising at least one host data item derived from the network traffic that originates from an operating system and/or is controlled by an operating system installed on at least one first node of the computer network; collecting a second data set comprising at least one node data item derived from the network traffic originating from the at least one first node; and comparing whether the second data set comprises at least one data item that differs from a corresponding data item within the at least one first data set. If such a difference is determined an intrusion in the computer network is assumed and/or detected.

One underlying concept of the present invention is the comparison of the network traffic monitored at two different points in the network. In particular, the network traffic generated by - and thus known to - the operating system of one node of a network is compared with the network traffic that is factually sent into the network by this node.

Preferably, the network traffic generated by the operating system of a node is monitored by means executed on and/or controlled by said operating system (such as an application) while the network traffic that is factually sent into the network by this node is monitored by means not executed on and/or controlled by said operating system of the monitored node (such as a network sniffer, a router, switch, and/or gateway in the network). The latter means are more preferably not executed by and/or located on the monitored host. Preferably, a plurality of such nodes of a computer network can be monitored in this manner to detect an intrusion of these nodes and/or the computer network they are part of.

In an uncompromised network the network traffic monitored at these two different points in the network should be identical. If, however, differences are detected this may indicate an intrusion of the computer network, in particular the intrusion of the monitored node by malware bypassing the node's operating system.

The method according to the invention preferably is a computer implemented method. It monitors the network traffic in a computer network at at least two distinct points to detect malicious activities and/or software.

The computer network can be any type of network known to the skilled person which comprises at least two nodes that can exchange data. Said nodes of the computer network are connected by network links which can, for example, be established by cable media or wireless media. Examples for a computer network are the internet, or an intranet. Preferably, the computer network of the present invention is an intranet connected to, preferably by means of a gateway, the internet.

By the term "collection of a data set" any monitoring, measuring, recording and/or storing of data traffic is comprised. The collected data of each data set preferably consist of at least one data item that is derived from the network traffic. As will be explained in more detail below such derived data items preferably comprise a source network address, a destination network address, a source port, a destination port, or information regarding the length of the data transmitted in the network.

Depending on the type of network protocol such data items are derivable from the sent data itself. As a preferred example, the network protocol is an internet protocol (IP) - such as the Ethernet protocol - and the transmitted network data comprises header fields that store the before mentioned information.

Preferably, a data set comprises more than one data item, more preferably it comprises one or more header fields of the Ethernet network frames. Even more preferably, these header fields are grouped within the data set, preferably they are grouped by source network address, destination network address, source port, destination port, and/or an information regarding the length of the transmitted data. More preferably, they are grouped by source network address and/or destination network address.

As explained above, one key idea of the present invention is the monitoring or collection of network traffic data at at least two different points in the network in order to compare such data sets for inconsistencies.

In particular, at least one first set of data is collected and/or derived from the network traffic that originates from an operating system (OS) and/or is controlled by an operating system installed on at least one first node of the computer network. Preferably, the network comprises more than one first node that is monitored and more than one first data set is consequently collected. In other words, the first set of data comprises data items that are generated and/or controlled by the OS executed on the first node that is monitored. Preferably, as malicious software usually bypasses the OS, these data items do not comprise data items generated by malicious software, i.e. software not part of the OS but executed, installed and/or run by or on the OS. The network traffic generated by the malicious software is usually unknown to the OS. In the following, such data items are designated "host data items".

The second set of data is collected and/or derived from the network traffic actually originating from the monitored first node. In other words, the second set of data comprises data items which are factually and/or physically sent into the computer network by the at least one first node monitored. Thus, the second data set comprises the data items derived from the network traffic that originates from an operating system (OS) and/or is controlled by an operating system installed on said first node of the computer network (i.e. the data items also comprised by the first data set) and additionally may comprise data items that are derived from network traffic that is generated by the first node but does not originate from an operating system (OS) and/or is not controlled by an operating system installed on said first node of the computer network (data traffic generated by malicious software).

The second set of data may preferably comprise and/or be derived from the total network traffic generated by more than one first node monitored. As an example, in an intranet comprising a number of first nodes, such as PCs, the second set of data comprises data items derived from the network traffic physically sent into the computer network by all of these first nodes. In the following, such data items are designated "node data items".

In the comparison step according to the invention the data items of first and second data set are compared for inconsistencies. More particular, it is compared whether the second data set comprises at least one data item that differs from a corresponding data item within the at least one first data set.

By the term "comparing" in said method step it is preferably meant to determine whether for a given node data item a corresponding, preferably an identical, host data item is present in the two data sets. Furthermore, by the term "differs" in said method step missing, altered or additional data items, preferably altered and/or additional data items, most preferably additional data items may be designated. A preferred example of such differing data items in the two compared data sets are destination network address and/or destination port data present as data item in the second data set but lacking from the first data set. A further preferred example of such differing data items may be a data item in the second data set storing the length/amount of the transmitted data wherein the corresponding data item in the first data set stores an altered, i.e. different, length/amount of data transmitted.

The term "corresponding", in particular regarding the comparison step of the inventive method, may designate that a given data item in the compared (first) data set of host data items is expected to have a certain value based on a given data item in the (second) data set of node data items. For example, if the second data set comprises a node data item referring to a specific destination network address (such as an IP address) an identical host data item is expected to be present in the first data set. If such is not the case this might be an indication for an intrusion of the network.

Preferably, and as described above, the data items are grouped in the data sets. Therefore, another preferred example is the comparison of a node data item referring to the length and/or amount of data sent grouped together with the data items of source network address and/or destination network address with a corresponding host data item in the same group of data items. Thus, preferably groups of data items in the second data set may be compared to corresponding groups of data items in first data set.

The comparison may be carried out for single data items, a plurality of data items, or all data items comprised in the data sets.

If a discrepancy is detected an alarm signal may preferably be raised. Advantageously, since the collected data items preferably comprise the source network address of the first node, such as its IP address in the network, said node can easily be identified. Consequently, the identified node may preferably be subjected to suitable counter measures, such as removal from the network, shutdown of the intruded node, and/or forensics to identify the malicious application.

The host data item or host data items (and thus at least part of the first data set) is/are preferably collected by the at least one first node of the computer network. Even more preferably, the host data item(s) is/are collected by a first module installed and/or executed on the first node. Most preferably, the host data item(s) is/are collected by a first module installed and/or executed on the operating system of the first node. The first module can thus be described as a piece of software, i.e. a client or agent, run/executed on the first node of the network.

The complete first data set, comprising more than one host data items, may be collected by the at least one first node. Preferably, the first module is installed on more than a single first node, most preferably it is installed on all first nodes of the network. It may be installed on all nodes of the network. This has the advantage that all first nodes of the network are monitored and an intrusion can more reliably be detected.

The node data item or node data items (and thus at least part of the second data set) is/are preferably collected by at least one second node of the computer network, i.e. a further node of the network which is different from the first node collecting the host data item(s) of the first data set and/or which is not dependent on the OS of the first node. Preferably, the node data item(s) is/are collected by a second module installed and/or executed on said second node. Most preferably, the node data item(s) is/are collected by a second module installed and/or executed on the operating system of the second node. The second module can thus be described as a piece of software or hardware run/executed/installed on the second node of the network or representing the second node of the network.

However, the node data item or node data items may also be collected by the first node, provided that the means for the collection of these node data items are not dependent on the OS system of the first node. As a preferred example, the node data item(s) may be collected by a second module built into the first node that is connected to the network and/or the network interface of said first node but not controlled by the OS of the first node. In this preferred case, the second module is generally a separate piece of hardware built into the first node, which may be a PC. Such a separate piece of hardware is preferably a hardware security module (HSM) known to the skilled person.

The comparison step of node data item and host data item can be carried out on/by any node of the network. Preferably it is carried out by an at least third node of the computer network. More preferably, by a third module installed and/or executed on said third node. Most preferably, the comparison is carried out by a third module installed and/or executed on the operating system of the third node the network. Said third node preferably is a further node of the network which is different from the first node collecting the host data item(s) of the first data set and, more preferably, is also different from the second node of the network collecting the node data items.

The complete second data set may be collected by more than a single node of the network. Particularly, it may be the case that the node data items are collected at more than one position in the network and, preferably, joined as the second data set at a single database. Preferably, such a database is a relational database such as an SQL database and/or a big data platform such as a Vertica Analytic Database, etc. that stores the second data set. This database can advantageously act as the third module to efficiently carry out the comparison step. Independently thereof, also in the case that the second data set is collected by a single node and/or module it may be stored in such a database.

Physically separating second and third modules, i.e. data collection and comparison are carried out on different nodes, does offer certain advantages. For example in case of the third module also comprising a database storing the considerable amount of data derived from the total data traffic in the network only this node needs to be large-dimensioned, while the one or more first and second nodes collecting the actual data may be kept small.

The at least first node, the at least second node and the at least third node of the computer network can be any suitable device known to the skilled person that is able to participate in a computer network. Preferably, the first node, the second node and the third node are independently selected from the group consisting of a PC, a mobile device, a mobile phone, a terminal, a network sniffer, a network bridge, a network switch, a network hub, a bridge, a gateway and a router.

More preferably, the first node is a mobile device and/or a PC.

The second node more preferably is selected from the group consisting of a network sniffer, a network bridge, a network switch, a router and/or a gateway. Most preferably, the second node is a network switch, a gateway or a router. The second node preferably is a device that offers port mirroring functionality. This advantageously offers the possibility to effortless collect the network traffic of the whole network and/or all first nodes at a single point.

The third node more preferably is a PC or a mainframe system, more preferably comprising a database.

Each of the nodes of the network can execute an operating system (OS). For the purposes of this invention also firmware, e.g. executed on a switch or gateway, is considered an OS. Various OS are known to the skilled person, non-limiting examples including Windows, MAC OS, Linux, Unix, Android or Apple iOS.

In the following the collected host and node data items are described in more detail. While reference is made to the internet protocol, especially to the Ethernet protocol it is important to note that basically every suitable network protocol may be used in the method according to the present invention. As explained above, the collected data items of each data set preferably consist of at least one data item that is derived from the network traffic and referring to a source network address, a destination network address, a source port, a destination port, and/or information regarding the length of the data transmitted in the network.

The host data item may comprise at least one field of a network frame of the data traffic that originates and/or is controlled by an operating system installed on the first node. Independently thereof, the node data item may comprise at least one field of a network frame of the data traffic that originates, preferably factually and/or physically, from said at least one first node. Preferably, the first data set and the second data set comprise data items that refer to the same fields of a network frame of the data traffic.

Preferably, the network frame is an Ethernet frame. As known to the skilled person, Ethernet frames comprise header fields and information fields, wherein the information field may comprise further header fields of higher OSI layers.

Preferably, the data item of first and second data sets comprises a header field. This advantageously reduces the amount of data that needs to be handled, stored and/or compared by the system. Preferably, the data item of first and second data sets comprises a header field that is a header field of the network layer, the transport layer, and/or the session layer of the OSI layers. Most preferably, these header fields are header fields of the TCP and/or UDP header.

Preferable fields of the network layer are selected from the group consisting of the IP frame (comprising IP header and IP information field), the IP header field, the source address field, the destination address field, the total length field, the protocol field and/or the information field of the IP frame.

Preferable fields of the transport layer are selected from the group consisting of the TCP frame (comprising TCP header and TCP information field), the TCP header field, the sequence number field, the information field of the TCP frame (comprising UDP header and UDP information field), the UDP frame, the UDP header field, the length field, the information field of the UDP frame, the source port field, the destination port field and/or the checksum field.

More preferably, the item of first and second data sets, i.e. the host data item and the node data item, comprises at least one field of an Ethernet frame selected from the group consisting of the source address field, the destination address field, the total length field, the protocol field, the source port field and/or the destination port field. Even more preferably, said field is selected from the group consisting of the source address field, the destination address field, the total length field, the source port field and/or the destination port field.

More preferably, the first and second data set comprises the following fields of at least a single Ethernet frame: the source address field, the destination address field, the total length field, the source port field, protocol field and/or the destination port field. This has the advantage that a very good compromise between data that has to be managed and specificity of the intrusion detection is achieved.

More preferably, the first and second data set comprises the following fields of at least a single Ethernet frame: the source address field, the destination address field, the total length field, the source port field and/or the destination port field. This has the advantage that the amount of data that has to be managed is even more reduced.

More preferably, the first and second data set comprises the following fields of at least a single Ethernet frame: the source address field, the destination address field. This has the advantage that the amount of data that has to be managed is even more reduced but still an intrusion may be detected very easily and traced back to a given first node in the network.

As explained above, the data items in first and second data set are preferably grouped for each monitored Ethernet frame. In other words, the host data items in the first data set and the node data items in the second data set are grouped by the network frame they are derived from. This way a comparison is possible more easily and more efficiently, especially if it is carried out by a (relational) database.

In a further embodiment, the first and second data set only consists of destination address field information. This has the advantage that the amount of data that has to be managed is reduced to the minimum and still an intrusion may be detected.

Preferably, the collected fields of a single Ethernet frame are those fields required to establish/identify a datagram socket and/or a stream socket. More preferably, in case of a connection oriented transport protocol, such as TCP, the collected fields of a single Ethernet frame are those fields required to establish/identify a stream socket. In other words, the fields collected in case of a connection oriented protocol can be grouped by session. In case of a connectionless transport protocol, such as UDP, the collected fields of a single Ethernet frame are those fields required to establish/identify a datagram socket.

The first and/or second set of data preferably comprises an additional data item (a data stamp) referencing the time of collection of each data item in the first and/or second data set. More preferably, if more than one data item, i.e. fields, per single network frame are collected in the respective data sets, said data items are grouped by use of this data stamp, i.e. by the time the network traffic occurred. Such a data stamp can, for example, be derived from the internal clocks of the network node(s) the first, second, and/or third module is executed on. More preferably, the internal clocks of said nodes are synchronized, preferably by means of an NTP-server present in the network. Even more preferably the time stamp is generated during the storage of the data item of a data set into a database. Current databases offer the possibility to automatically assign a time stamp upon entry of a data item. Advantageously, the time stamp provides for efficient means to compare the data items in the two data sets.

The generation of the first and second dataset is preferably carried out by collecting a plurality of host data items and a plurality of node data items, respectively starting from a first time (t0) for a predetermined time interval (M). The skilled person will appreciate that the exact duration of the sampling of data items highly depends on the size of the network, i.e. the participating nodes and/or the amount of data sent by these nodes. It likewise depends on the capacities of the system according to the invention to manage the amount of collected data. The predetermined time interval usually is in the range of ≥ 1 min and ≤ 20 min. Preferably, it is about 5 min as this time interval has proven as highly effective with current networks and database systems handling the generated data.

The first set of data may preferably further comprise at least one host-sum data item calculated from the total amount of network traffic in the predetermined time interval that originates from and/or is controlled by the operating system installed on at least one first node. Additionally, the second set of data may preferably comprise at least one node-sum data item calculated from the total amount of network traffic in the predetermined time interval that originates from said first node. The total amount of data is preferably derived from the total length fields of the monitored network frames. Furthermore, host-sum data item and node-sum data item are preferably compared as the two respective data items of the two data sets in the comparison step according to the invention. In other words, the client-sum data items and node-sum data items are used as the data items of first and second set of data in the comparison step.

Advantageously, by calculation of node-sum and host-sum data items and comparison of these data items, the comparison according to the present invention can be carried out more efficiently and very reliably. If, for example, node-sum and host-sum data items for a given node of the network differ, this is an indication for an intrusion of the network, particularly of the network node the node-sum and host-sum data items have been derived from.

The generation of the first and second dataset from a first time (t0) for a predetermined time interval (M) can preferably be repeated. Consequently, also the calculation of node-sum and host-sum data items can preferably be repeated. More preferably, the repetition is carried out periodically. This way, a continuous intrusion detection of the network is provided.

Most preferably, between each two repetitions a predetermined second time interval is inserted during which no monitoring takes place. Advantageously, the method according to the invention thus provides a spot check of the network integrity while keeping the amount of data that has to be managed low. The second time interval can be chosen depending on the needs and according to the capacities of the components of the network. Preferably, it is chosen randomly, i.e. with differing length each time, within predetermined boundaries. In other words, a time interval of random duration is inserted between two cycles of repetition.

In another aspect of the present invention a computer system is provided. Said computer system is suitable to carry out the method according to the invention. In particular, the computer system comprises a computer network of at least two nodes and is suitable to detect an intrusion therein.

In the following the computer system according to the invention is described in more detail. As will be appreciated by the skilled person the features of said system correspond to those described above with regard to the method of the invention. Therefore, the following description will focus on some of the main aspects of the computer system while all further features described for the method likewise apply for the computer system.

The computer system according to the invention comprises at least a first node and at least a second node interconnected via a network link, thereby creating a computer network. It furthermore comprises at least a first module, at least a second module and at least a third module. The computer system is characterized by the further following features: the first module is installed on the first node and adapted to collect at least one first data set comprising at least one host data item derived from the network traffic that originates from an operating system and/or is controlled by an operating system installed on said first node; the second module is adapted to collect a second data set comprising at least one node data item derived from the network traffic originating from the at least one first node; and the third module is adapted to compare whether the second data set comprises at least one data item that differs from a corresponding data item within the at least one first data set.

The computer system is adapted to transmit network data utilizing a network protocol, preferably an internet protocol, more preferably the Ethernet protocol.

The first, second, and third module may be hardware or software modules. Preferably, the first module is a software module executed by the OS of the first node. Preferably, the third module is a database, more preferably it is a relational database.

Preferably, second and third modules are installed on a second node. Furthermore, the computer system may preferably comprise a third node, the second module may be installed on the second node and the third module may be installed on said third node.

Furthermore, the computer system according to the present invention may comprise, as a further node, a device to synchronize the clocks of the nodes of the network. Preferably, this device is an NTP-server.

The features described for the method and the system according to the present invention are freely combinable as long as nothing other is explicitly stated and/or as long as no obvious contradiction would arise from such a combination.

Further advantages, details and features of the present invention result from the following embodiments of the present invention. Thereby, the following is shown:
- Figure 1:: a schematic view of a computer system according to one embodiment of the invention comprising three nodes and three modules installed thereon;
- Figure 2:: is a schematic view of a computer system according to another embodiment of the invention comprising two nodes and three modules installed thereon;
- Figure 3:: is a schematic view of a computer system according to another embodiment of the invention, wherein the computer system comprises an NTP-server.

In the following description same reference numerals describe same components / parts and features, respectively, so that a description in connection with a figure in respect of a component and feature, respectively, is also valid for other figures, so that a repetitive description is omitted. Furthermore, features described in connection with one embodiment are also usable and applicable separately in another embodiment.

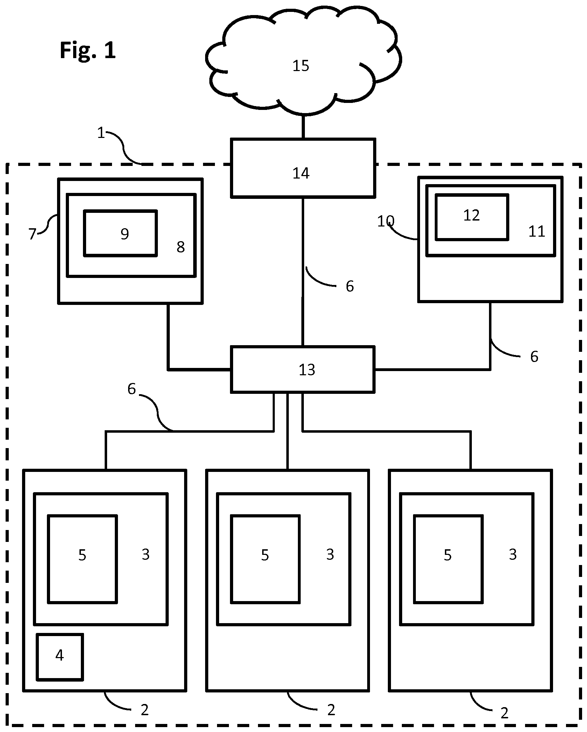

Figure 1 gives a schematic view of a computer system (1) according to one embodiment of the invention.

The computer system comprises an intranet (1) which is connected to the internet (15) by means of a gateway (14). The intranet (1) comprises several nodes, inter alia, three first nodes (2), a second node (7) and a third node (10).

The first nodes (2), the second node (7), the third node (10) and the gateway (14) are connected to a network switch (13) by network links (6).

The first nodes (2) comprise operating systems (3) installed and executed thereon. Likewise, operating systems are installed and executed on the second and third nodes (7,10). The operating systems of the first nodes (3) are Microsoft Windows operating systems. The operating systems of second and third nodes (8, 11) are Linux operating systems.

On each of the first nodes (2) a first software module (5) is installed that is executed by the operating system of the first modules (3). These first modules (5) are adapted to monitor the network traffic that originates from the operating system (3) and/or is controlled by the operating system installed on at least one first node (2). Thereby, first data sets comprising at least one host data item are collected. These may be sent over the network to the third module (12).

A second software module (9) is installed and executed on the second node (7) which is connected to the network via network switch (13) that offers a port mirroring functionality. Thereby, all network traffic originating from the first nodes (2) may conveniently be monitored. The second module (9) is adapted to monitor the network traffic that originates from at least one of the three first nodes (2). Thereby, a second data set comprising at least one node data item is collected. Said second data set may likewise be sent over the network to the third module (12).

As can further be taken from figure 1, the network (1) has been intruded by a malicious software (4). Said malicious software (4) is executed on one of the first nodes (2) and generates additional network traffic. The malicious software (4) however, is not installed on the operating system (3) itself. Therefore, it bypasses the operating system (3) or - in other words - the operating system is not aware of the additional network traffic generated by the malicious software. Consequently, the first module (5) executed by the operating system (3) of the first node cannot monitor the additional network traffic generated by the malicious software (4).

However, said additional network traffic generated by the malicious software (4) on the first node (2) will be monitored by the second module (9) installed on the second node (7). This is due to the fact that the second node (2) is monitoring the first node (2) from "the outside" and thereby is able to detect all factual/physical network traffic sent into the network (1) by the first node (2) intruded by the malicious software (4).

The third module (12) installed and executed on the third node (10) is adapted to compare the node data item(s) in the second data set with (a) corresponding host data item(s) in the first data set. Particularly, it is adapted to determine whether a given node data item differs from a corresponding host data item. If such is the case, the third module (12) may raise an alarm to signal a potential intrusion of the network. The third module (12) is a relational database, such as an SQL database, which advantageously makes a storing and comparing of the two data sets very convenient and quick.

In addition, and depending on the nature of the data items comprised by the data sets, the third module (12) may identify the specific first module (2) on which the malicious software (4) is executed. As an example, this information could be derived from the source address field of the TCP or UDP header of the deriving node data item.

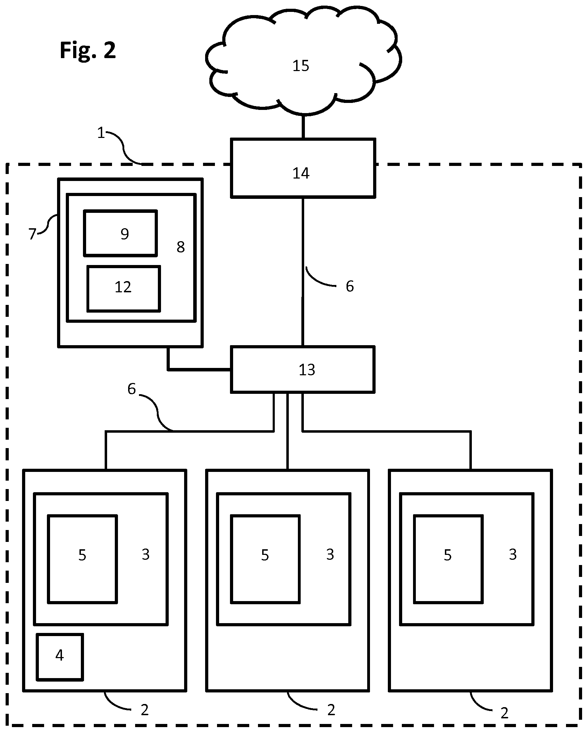

Figure 2 gives a schematic view of a computer system (1) according to a further embodiment of the invention.

In contrast to the embodiment depicted by figure 1, the network (1) comprises only three first nodes (2) and a second node (7). On the operating system (8) of the second node, which is a Linux operating system, both the second module (9) and the third module (12) are installed and executed.

Therefore, first and second data sets collected by the second module (9) need not be transferred over the network (1) to a third module hosted on a third node. Preferably, the second (9) and/or third (12) module may likewise be installed and executed on the operating system of the gateway (14), or even the operating system (firmware) of the network switch (13).

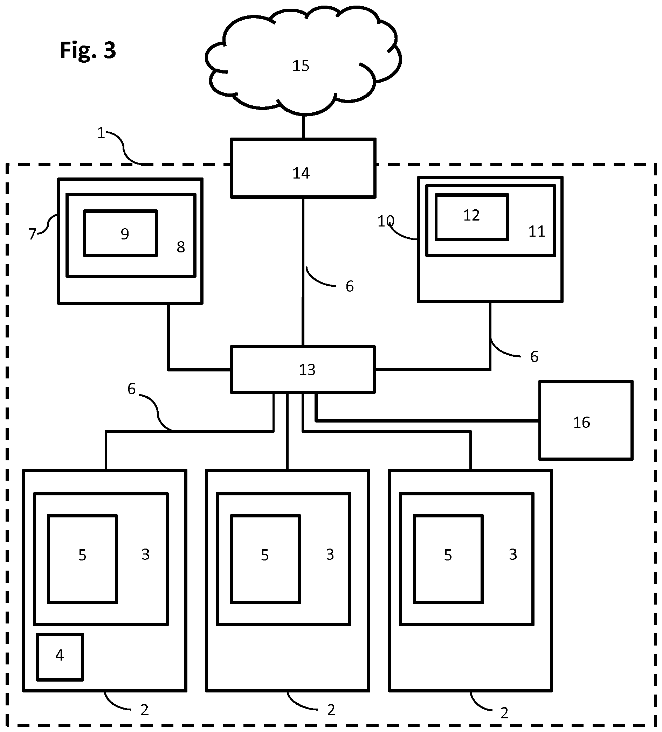

Figure 3 gives a schematic view of a computer system (1) according to an even further embodiment of the invention.

The network setup corresponds to the network setup of figure 1 with the addition that the network (1) comprises an NTP-server (16). Said NTP-server is likewise connected to the network switch (13) and thus able to provide a timing signal to all further nodes in the network (1). In particular, first nodes (2) and second node (2) are thus able to synchronize their internal clocks.

The data items collected in the first and second data set can then advantageously comprise a time stamp as a further data item. This way, it is possible to retrace the exact time when a given network traffic occurred. Consequently, the data sets can be compared more conveniently.

### List of reference numerals:

- 1: Computer network; intranet; computer system
- 2: First node
- 3: Operating System of first node
- 4: Malicious application executed on first node
- 5: First module
- 6: Network link
- 7: Second node
- 8: Operating system of second node
- 9: Second module
- 10: Third node
- 11: Operating system of third node
- 12: Third module; Database; relational database
- 13: Network switch
- 14: Gateway
- 15: Internet
- 16: NTP Server

## Claims

1. Method for identifying an intrusion in a computer network (1), the method comprising the following steps:
- collecting at least one first data set comprising at least one host data item derived from the network traffic that originates from an operating system (3) and/or is controlled by an operating system installed on at least one first node (2) of the computer network;
- collecting, by at least a second node (7) different from the first node and/or independent of the operating system(3) of the first node, a second data set comprising at least one node data item derived from the network traffic originating from the at least one first node;
- detecting whether the second data set comprises at least one data item that differs from a corresponding data item within the at least one first data set; and
- raising an alarm signal if a difference is detected.

2. The method according to claim 1, wherein the host data item is collected by the at least one first node of the computer network, wherein the node data item is collected by at least one second node (7) of the computer network, and/or wherein the comparison step of node data item and host data item is carried out by an at least third node (10) of the computer network.

3. The method according to any one of the preceding claims, wherein the host data item comprises at least one field of a network frame of the data traffic that originates and/or is controlled by an operating system installed on the first node and the node data item comprises at least one field of a network frame of the data traffic originating from the at least one first node.

4. The method according to claim 3, wherein the network frame is an Ethernet frame and the field is selected from the group consisting of the IP frame, the IP header field, the source address field, the destination address field, the total length field, the protocol field and/or the information field of the IP frame.

5. The method according to claim 3, wherein the network frame is an Ethernet frame and the field is selected from the group consisting of the TCP frame, the TCP header field, the sequence number field, the information field of the TCP frame, the UDP frame, the UDP header field, the length field, the information field of the UDP frame, the source port field, the destination port field and/or the checksum field.

6. The method according to claim 4 or 5, wherein the field is selected from the header field.

7. The method according to claim 6, wherein the header field is selected from the group consisting of the source address field, the destination address field, the total length field, the protocol field, the source port field and/or the destination port field.

8. The method according to any one of claims 3-7, wherein the host data items in the first data set and the node data items in the second data set are grouped by the network frame they are derived from.

9. The method according to any one of the preceding claims, wherein the host data items in the first data set and the node data items in the second data set are grouped by the time the network traffic occurred.

10. The method according to any one of the preceding claims, wherein the first and second set of data is generated by collecting a plurality of host data items and a plurality of node data items starting from a first time (t0) for a predetermined time interval (M).

11. The method according to claim 10, wherein
- the first set of data comprises at least one host-sum data item calculated from the total amount of network traffic in the predetermined time interval that originates from and/or is controlled by the operating system installed on at least one first node, and
- the second set of data comprises at least one node-sum data item calculated from the total amount of network traffic in the predetermined time interval that originates from the first node.

12. The method according to claim 11, wherein the collection of a plurality of host data items and node data items for a predetermined time interval is repeated periodically.

13. The method according to claim 12, wherein a time interval of random duration is inserted between two cycles of repetition.

14. Computer system (1) for carrying out a method according to any one of claims 1-13 comprising
- at least a first node (2) and at least a second node (7), different from the first node and/or independent of an operating system (3) of the first node, interconnected via a network link (6) to create a computer network,
- at least a first module (5), at least a second module (9) and at least a third module (12),
wherein the computer system is **characterized by** the following features:
- the first module (5) is installed on the first node (2) and adapted to collect at least one first data set comprising at least one host data item derived from the network traffic that originates from the operating system (3) and/or is controlled by an operating system installed on said first node;
- the second module (9) is installed on the second node (7) and adapted to collect a second data set comprising at least one node data item derived from the network traffic originating from the at least one first node; and
- the third module (12) is adapted to detect whether the second data set comprises at least one data item that differs from a corresponding data item within the at least one first data set.

## Patentansprüche

1. Verfahren zum Identifizieren eines Eindringens in ein Computernetz (1), wobei das Verfahren die folgenden Schritte umfasst:
- Sammeln mindestens einer ersten Datengruppe, die mindestens ein Host-Datenelement enthält, das von dem Netzverkehr abgeleitet ist, der von einem Betriebssystem (3) stammt und/oder durch ein Betriebssystem gesteuert wird, das auf mindestens einem ersten Knoten (2) des Computernetzes installiert ist;
- Sammeln durch mindestens einen zweiten Knoten (7), der von dem ersten Knoten verschieden ist und/oder von dem Betriebssystem (3) des ersten Knotens unabhängig ist, einer zweiten Datengruppe, die mindestens ein Knotendatenelement enthält, das von dem Netzverkehr abgeleitet ist, der von dem mindestens einen ersten Knoten stammt;
- Detektieren, ob die zweite Datengruppe mindestens ein Datenelement umfasst, das von einem entsprechenden Datenelement innerhalb der mindestens einen ersten Datengruppe verschieden ist; und
- Steigern eines Alarmsignals, wenn ein Unterschied detektiert wird.

2. Verfahren nach Anspruch 1, wobei das Host-Datenelement durch den mindestens einen ersten Knoten des Computernetzes gesammelt wird, wobei das Knotendatenelement durch den mindestens einen zweiten Knoten (7) des Computernetzes gesammelt wird, und/oder wobei der Vergleichsschritt des Knotendatenelements und des Host-Datenelements mindestens durch einen dritten Knoten (10) des Computernetzes ausgeführt wird.

3. Verfahren nach einem der vorhergehenden Ansprüche, wobei das Host-Datenelement mindestens ein Feld eines Netzrahmens des Datenverkehrs, der von einem Betriebssystem, das auf dem ersten Knoten installiert ist, stammt oder von ihm gesteuert wird, umfasst und das Knotendatenelement mindestens ein Feld eines Netzrahmens des Datenverkehrs umfasst, der von dem mindestens einen ersten Knoten stammt.

4. Verfahren nach Anspruch 3, wobei der Netzrahmen ein Ethernet-Rahmen ist und das Feld aus der Gruppe ausgewählt ist, die aus dem IP-Rahmen, dem IP-Dateikopffeld, dem Herkunftsadressfeld, dem Bestimmungsadressfeld, dem Gesamtlängenfeld, dem Protokollfeld und/oder dem Informationsfeld des IP-Rahmens besteht.

5. Verfahren nach Anspruch 3, wobei der Netzrahmen ein Ethernet-Rahmen ist und das Feld aus der Gruppe ausgewählt ist, die aus dem TCP-Rahmen, dem TCP-Dateikopffeld, dem Folgennummernfeld, dem Informationsfeld des TCP-Rahmens, dem UDP-Rahmen, dem UDP-Dateikopffeld, dem Längenfeld, dem Informationsfeld des UDP-Rahmens, dem Herkunftsanschlussfeld, dem Bestimmungsanschlussfeld und/oder dem Prüfsummenfeld besteht.

6. Verfahren nach Anspruch 4 oder 5, wobei das Feld aus dem Dateikopffeld ausgewählt ist.

7. Verfahren nach Anspruch 6, wobei das Dateikopffeld aus der Gruppe ausgewählt ist, die aus dem Herkunftsadressfeld, dem Bestimmungsadressfeld, dem Gesamtlängenfeld, dem Protokollfeld, dem Herkunftsanschlussfeld und/oder dem Bestimmungsanschlussfeld besteht.

8. Verfahren nach einem der Ansprüche 3-7, wobei die Host-Datenelemente in der ersten Datengruppe und die Knotendatenelemente in der zweiten Datengruppe durch den Netzrahmen gruppiert sind, von dem sie abgeleitet sind.

9. Verfahren nach einem der vorhergehenden Ansprüche, wobei die Host-Datenelemente in der ersten Datengruppe und die Knotendatenelemente in der zweiten Datengruppe durch die Zeit gruppiert sind, zu der der Netzverkehr auftrat.

10. Verfahren nach einem der vorhergehenden Ansprüche, wobei die erste und die zweite Datengruppe durch Sammeln mehrerer Host-Datenelemente und mehrerer Knotenelemente beginnend zu einem ersten Zeitpunkt (t0) für ein vorgegebenes Zeitintervall(M) erzeugt werden.

11. Verfahren nach Anspruch 10, wobei
- die erste Datengruppe mindestens ein Host-Summendatenelement umfasst, das aus der Gesamtmenge des Netzverkehrs in dem vorgegebenen Zeitintervall, der von dem Betriebssystem, das auf mindestens einem ersten Knoten installiert ist, stammt oder durch es gesteuert wird, berechnet wird;
- die zweite Datengruppe mindestens ein Knotensummendatenelement umfasst, das aus der Gesamtmenge des Netzverkehrs in dem vorgegebenen Zeitintervall, der von dem ersten Knoten stammt, berechnet wird.

12. Verfahren nach Anspruch 11, wobei die Sammlung mehrerer Host-Datenelemente und Knotendatenelemente für ein vorgegebenes Zeitintervall periodisch wiederholt wird.

13. Verfahren nach Anspruch 12, wobei ein Zeitintervall von zufälliger Dauer zwischen zwei Zyklen der Wiederholung eingefügt ist.

14. Computersystem (1) zum Ausführen eines Verfahrens nach einem der Ansprüche 1-13, das Folgendes umfasst:
- mindestens einen ersten Knoten (2) und mindestens einen zweiten Knoten (7), der von dem ersten Knoten verschieden ist und/oder von einem Betriebssystem (3) des ersten Knotens unabhängig ist, die über eine Netzverbindung (6) verbunden sind, um ein Computernetz zu erzeugen,
- mindestens ein erstes Modul (5), mindestens ein zweites Modul (9) und mindestens ein drittes Modul (12),
wobei das Computersystem **gekennzeichnet ist durch** die folgenden Eigenschaften:
- das erste Modul (5) ist auf dem ersten Knoten (2) installiert und ausgelegt, mindestens eine erste Datengruppe zu sammeln, die mindestens ein Host-Datenelement umfasst, das von dem Netzverkehr abgeleitet ist, der von dem Betriebssystem (23) stammt und/oder durch ein Betriebssystem, das auf dem ersten Knoten installiert ist, gesteuert wird;
- das zweite Modul (9) ist auf dem zweiten Knoten (7) installiert und ausgelegt, eine zweite Datengruppe zu sammeln, die mindestens ein Knotendatenelement umfasst, das von dem Netzverkehr abgeleitet ist, der von dem mindestens einen ersten Knoten stammt; und
- das dritte Modul (12) ist ausgelegt, zu detektieren, ob die zweite Datengruppe mindestens ein Datenelement umfasst, das von einem entsprechenden Datenelement innerhalb der mindestens einen ersten Datengruppe verschieden ist.

## Revendications

1. Procédé d'identification d'une intrusion dans un réseau informatique (1), le procédé comprenant les étapes suivantes :
- collecter au moins un premier ensemble de données comprenant au moins un élément de données hôte dérivé du trafic réseau qui provient d'un système d'exploitation (3) et/ou qui est contrôlé par un système d'exploitation installé sur au moins un premier noeud (2) du réseau informatique ;
- collecter, par au moins un deuxième noeud (7) différent du premier noeud et/ou indépendant du système d'exploitation (3) du premier noeud, un second ensemble de données comprenant au moins un élément de données dérivé du trafic réseau provenant de l'au moins un premier noeud ;
- détecter si le second ensemble de données comprend au moins un élément de données qui diffère d'un élément de données correspondant dans l'au moins un premier ensemble de données ; et
- émettre un signal d'alarme si une différence est détectée.

2. Procédé selon la revendication 1, dans lequel l'élément de données hôte est collecté par l'au moins un premier noeud du réseau informatique, où l'élément de données de noeud est collecté par au moins un deuxième noeud (7) du réseau informatique, et/ou où l'étape de comparaison de l'élément de données de noeud et de l'élément de données hôte est exécutée par un au moins troisième noeud (10) du réseau informatique.

3. Procédé selon l'une quelconque des revendications précédentes, dans lequel l'élément de données hôte comprend au moins un champ d'une trame réseau du trafic de données qui provient et/ou est contrôlé par un système d'exploitation installé sur le premier noeud, et l'élément de données de noeud comprend au moins un champ d'une trame réseau du trafic de données provenant de l'au moins un premier noeud.

4. Procédé selon la revendication 3, dans lequel la trame réseau est une trame Ethernet et le champ est sélectionné dans le groupe constitué par la trame IP, le champ d'en-tête IP, le champ d'adresse source, le champ d'adresse de destination, le champ de longueur totale, le champ de protocole et/ou le champ d'informations de la trame IP.

5. Procédé selon la revendication 3, dans lequel la trame réseau est une trame Ethernet et le champ est sélectionné dans le groupe constitué par la trame TCP, le champ d'en-tête TCP, le champ de numéro de séquence, le champ d'informations de la trame TCP, la trame UDP, le champ d'en-tête UDP, le champ de longueur, le champ d'informations de la trame UDP, le champ de port source, le champ de port de destination et/ou le champ de somme de contrôle.

6. Procédé selon la revendication 4 ou la revendication 5, dans lequel le champ est sélectionné à partir du champ d'en-tête.

7. Procédé selon la revendication 6, dans lequel le champ d'en-tête est sélectionné dans le groupe constitué par le champ d'adresse source, le champ d'adresse de destination, le champ de longueur totale, le champ de protocole, le champ de port source et/ou le champ de port de destination.

8. Procédé selon l'une quelconque des revendications 3 à 7, dans lequel les éléments de données hôtes dans le premier ensemble de données et les éléments de données de noeud dans le second ensemble de données sont regroupés par la trame réseau dont ils sont dérivés.

9. Procédé selon l'une quelconque des revendications précédentes, dans lequel les éléments de données hôtes dans le premier ensemble de données et les éléments de données de noeud dans le second ensemble de données ont été regroupés au moment où le trafic réseau s'est produit.

10. Procédé selon l'une quelconque des revendications précédentes, dans lequel les premier et second ensembles de données sont générés par la collecte d'une pluralité d'éléments de données hôtes et d'une pluralité d'éléments de données de noeud à partir d'un premier temps (t0) pendant un intervalle de temps prédéterminé (M).

11. Procédé selon la revendication 10, dans lequel
- le premier ensemble de données comprend au moins un élément de données de somme d'hôte calculé à partir de la quantité totale de trafic réseau dans l'intervalle de temps prédéterminé qui provient et/ou est contrôlé par le système d'exploitation installé sur au moins un premier noeud, et
- le second ensemble de données comprend au moins un élément de données de somme de noeud calculé à partir de la quantité totale de trafic réseau dans l'intervalle de temps prédéterminé qui provient du premier noeud.

12. Procédé selon la revendication 11, dans lequel la collecte d'une pluralité d'éléments de données hôtes et d'éléments de données de noeud pendant un intervalle de temps prédéterminé est répétée périodiquement.

13. Procédé selon la revendication 12, dans lequel un intervalle de temps de durée aléatoire est inséré entre deux cycles de répétition.

14. Système informatique (1) pour la mise en oeuvre d'un procédé selon l'une quelconque des revendications 1 à 13 comprenant :
- au moins un premier noeud (2) et au moins un deuxième noeud (7), différent du premier noeud et/ou indépendant d'un système d'exploitation (3) du premier noeud, interconnectés par l'intermédiaire d'une liaison réseau (6) pour créer un réseau informatique,
- au moins un premier module (5), au moins un deuxième module (9) et au moins un troisième module (12),
où le système informatique est **caractérisé par** les points suivants :
- le premier module (5) est installé sur le premier noeud (2) et adapté pour collecter au moins un premier ensemble de données comprenant au moins un élément de données hôte dérivé du trafic réseau qui provient du système d'exploitation (3) et/ou qui est contrôlé par un système d'exploitation installé sur ledit premier noeud ;
- le deuxième module (9) est installé sur le deuxième noeud (7) et adapté pour collecter un second ensemble de données comprenant au moins un élément de données de noeud dérivé du trafic réseau provenant de l'au moins un premier noeud ; et
- le troisième module (12) est adapté pour détecter si le second ensemble de données comprend au moins un élément de données qui diffère d'un élément de données correspondant dans l'au moins un premier ensemble de données.
